Europäisches Patentamt

European Patent Office

Office européen des brevets

(11) Veröffentlichungsnummer: **0 265 624**
**B1**

(12) **EUROPÄISCHE PATENTSCHRIFT**

(45) Veröffentlichungstag der Patentschrift: **09.01.91**

(21) Anmeldenummer: **87112528.2**

(22) Anmeldetag: **28.08.87**

(51) Int. Cl.⁵: **F 16 K 11/087,** F 16 K 31/04

(54) **Elektrisch antreibbarer Mehrwegehahn.**

(30) Priorität: **25.10.86 DE 8628538 u**

(43) Veröffentlichungstag der Anmeldung:
**04.05.88 Patentblatt 88/18**

(45) Bekanntmachung des Hinweises auf die
Patenterteilung:
**09.01.91 Patentblatt 91/02**

(84) Benannte Vertragsstaaten:
**AT BE CH DE ES FR GB GR IT LI LU NL SE**

(56) Entgegenhaltungen:
**FR-A-2 231 272**
**FR-A-2 539 204**
**GB-A-2 051 311**
**US-A-3 206 117**
**US-A-4 398 562**

(73) Patentinhaber: **EM-Technik GmbH**
**Armaturenbau Industriestrasse 2**
**D-6701 Maxdorf (DE)**

(72) Erfinder: **Meier, Norbert**
**Im Horst 4**
**D-6701 Maxdorf (DE)**

(74) Vertreter: **Zellentin, Wiger et al**
**Patentanwälte Dr. rer. nat. Rüdiger Zellentin**
**Dipl.-Ing. Wiger Zellentin Rubensstrasse 30**
**D-6700 Ludwigshafen (DE)**

## Beschreibung

Die vorliegende Erfindung betrifft einen Mehrwegehahn, insbesondere einen Mehrwegkugelhahn sit elektrischem Antrieb.

Kugelhähne werden für hydraulische oder pneumatische Steuerungen sowie für die Zufuhr bzw. Dosierung von fließfähigen Medien eingesetzt. Dabei kommen in vorliegendem Falle insbesondere niedere Leitungsquerschnitte in Frage, wie sie hauptsächlich im Laborbereich auftreten.

Aus der GB-A-2 051 311 ist ein in einem Gehäuse angeordnetes Mehrwegeventil für ein zentrales Heizsystem bekannt, bei dem eine metallische Lochtrommel mit Hilfe eines in einer Abdeckhaube befindlichen Elektromotors angetrieben wird. Den Löchern der Lochtrommel sind Kanäle zugeordnet, die über die Trommel mit Flüssigkeit versorgt oder wahlweise abgesperrt werden. Der Motor wirkt mit Schaltnocken zusammen, die die Lochtrommel positionieren.

Dabei erfolgt der Antrieb zwischen Elektromotor und Lochtrommel über eine in das Material der Trommel eingefügte separate Antriebswelle.

Eine derartige Ausführung bringt z.B. bei Anwendung von Kunststoffen Nachteile, da diese nachgiebig sind und nach kurzer Zeit eine präzise Schaltung nicht mehr möglich ist. Darüber hinaus zeigt dieser Stand der Technik keine Lösungsmöglichkeiten für die Abdichtung von Mehrwegeventilen in Form von Kugelhähnen.

Die Aufgabe der vorliegenden Erfindung bestand u.a darin, derartige Mehrwegekugelhähne für eine elektrische Ansteuerung mit einem auf geringen Platzbedarf und einer zuverlässigen präzisen Mechanik und Dichtung ausgelegten elektrischen Motorantrieb auszurüsten.

Die Lösung dieser Aufgabe gelingt bei einem Mehrwegekugelhahn, bestehend aus einer durchbrochenen Kugel und einem diese umgebenden Gehäuse mit darin angeordneten Kanälen, einer Abdeckhaube mit einem Elektromotor mit Getriebe sowie einem Schaltnocken aufweisenden, mit Schaltern zusammenwirkendem Adapter und einem zwischen Kugel und Adapter befindlichem Betätigungsansatz zur Öbertragung von Drehmomenten auf die Kugel, bei welchem erfindungsgemäß Kugel und Betätigungsansatz einstückig ausgebildet sind, wobei der Adapter auf den Betätigungsansatz aufgeschoben und kraftschlüssig mit ihm verbunden ist und unter Bildung eines Gleitlagers an der Innenwandung einer Bohrung des Kugelhahngehäuses anliegt und kugelseitig gegen einen O-Ring ausläuft.

Das Hahngehäuse ist dabei modifiziert für die Anbringung der den Motor und das Getriebe sowie die Schaltnocken und die Schalterbeherbergenden, vorzugsweise einteilig ausgebildeten Abdeckhaube.

Das Getriebe kann relativ stark untersetzend ausgelegt sein, um eine exakte Querschnittsübereinstimmung zwischen den Kugeldurchbrüchen und den an sie druckverlustfrei anzuschließenden Leitungen zu gewährleisten, da so die Schaltwege des Hahnes gering gehalten werden können.

Die Abdeckhaube wird dabei in besonders vorteilhafter Weise über einen mit dem Hahngehäuse verschraubbaren Flansch mit diesem verbunden.

Dazu weist das Hahngehäuse ein koaxial zu dem Betätigungsansatz, bzw. dem mit diesem kraftschlüssig verbundenen Adapter angeordnetes Gewinde auf, das z.B. gegen einen Anschlag ausläuft. Mit dem Flansch kann die Haube ebenfalls über ein Gewinde oder auch mit Hilfe von z.B. Stiftschvauben verbunden sein.

Als mit den Schaltnocken zusammenwirkende Schalter kommen wegen ihrer kleinen Bauart insbesondere sog. Mikroschalter zum Einsatz, die über Fühler von den Schaltnocken betätigt werden.

Die vorliegende Neuerung ist für alle herkömmlichen Mehrwegekugelhähne verwendbar, wie z.B. Durchgangshähne oder Dreiwegehähne. Hervorzuheben ist, daß mit der vorliegenden Neuerung eine Ausführungsform als Vier- und Fünfwegehahn möglich ist, wie er insbesondere bei der Gasanalyse mit Vorteil eingesetzt werden kann. Dabei ist vorgesehen, auf dem Adapter zusätzliche Schaltnockenscheiben anzuordnen, die im Gegensatz zu auf einer Nockenperipherie fest angeordneten Nocken auch nachträglich genau justiert werden können, wobei jeder Nockenscheibe dann auch ein Schaltelement zuzuordnen ist.

Die neuerungsgemäß anzubringende Haube kann vorzugsweise und ohne weiteres hoch flüssigkeitsdicht mit dem Hahngehäuse verbunden werden. Dabei stehen für die Abdichtung nach außen genügend Mittel des Standes der Technik zur Verfügung. Für die Abdichtung nach innen, gegen Leckagen der Kugel gegenüber den Kanälen wird vorgeschlagen, daß der Adapter den Betätigungsansatz übergreifend ausgebildet und im Hahngehäuse gleitend gelagert ist. Der Adapter kann dabei vorteilhaft gegen eine O-Ringdichtung auslaufen.

Letztlich wird vorgeschlagen, zusätzlich zur Lageveränderung der Schaltnocken auch oder anstelle davon, die Mikroschalter justierbar in der Haube anzuordnen.

Der Kugelhahn ist vorzugsweise mit dem Betätigungsansatz einstückig und materialeinheitlich vorzugsweise aus Polytetrafluorethylen ausgebildet.

Ebenso ist der untere, die Kugel aufnehmende Teil des Hahngehäuses kugelförmig, d.h. ohne Totvolumen, ausgedreht, wodurch einmal ein deformierendes Fließen des PTFE und zum anderen eine Ablagerung auskristallisierender Massen verhindert wird.

Anhand der beiliegenden Figuren wird die vorliegende Neuerung näher erläutert.

Fig. 1 zeigt den gesamten Aufbau des neuerungsgemäßen Mehrwegeventils;

Fig. 2 zeigt eine Teilansicht.

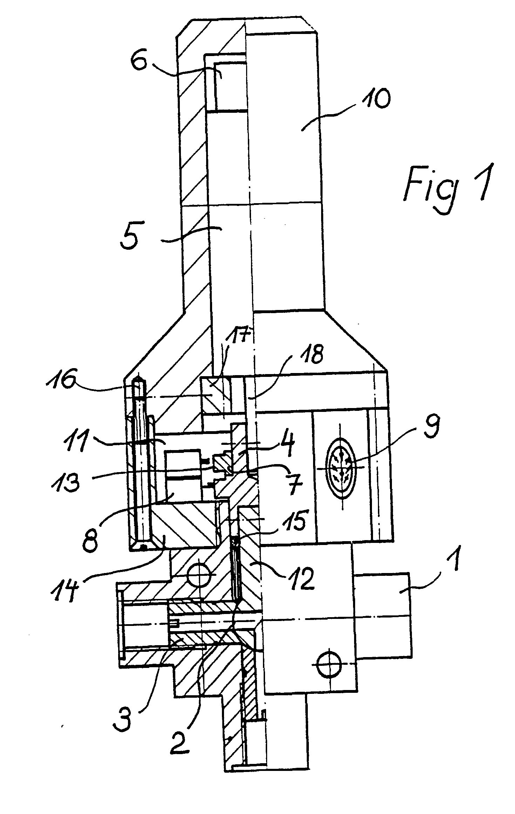

Fig. 1. Im unteren Teil der Darstellung ist ein Dreiwegehahn gezeigt, mit einer vertikalen Zuführung und zwei horizontalen Ableitungen. Diese sind in dem Hahngehäuse 1 untergebracht.

Zentral in dem Hahngehäuse 1 ist die Kugel untergebracht, die von Buchsen 3 gefaßt ist. Grundsätzlich aber ist auch eine Ausführung ohne Buchsen im Rahmen der vorliegenden Neuerung eingeschlossen.

An die Kugel 2 angeformt ist der Betätigungsansatz 12, mit dessen Hilfedas Drehen der Kugel bewerkstelligt wird. Mit dem Betätigungsansatz 12 kraftschlüssig drehfest verbunden, ist der Adapter 4, der den Betätigungsansatz nach unten hin übergreift, an der entsprechenden Bohrung im Kugelhahngehäuse 1 anliegt und so ein Gleitlager mit diesem bildet. Der Adapter läuft dabei nach unten gegen den O-Ring 15 aus, der gegen den Kugelhahn abdichtet.

Der Adapter 4 trägt einen Nocken 13, dem gegenüber ein Mikroschalter 8 angeordnet und der von diesem betätigt wird.

Auf das Kugelhahngehäuse 1 ist ein Flansch 14 aufgeschraubt, mit dem wiederum unter Freilassung eines Hohlraumes 11 für das Unterbringen der Mikroschalter 8, die Haube 10 mit Hilfe von Stiftschrauben 16 verbunden ist. In der Haube 10 befinden sich das Getriebe 5 und der Motor 6, die beide durch den Ring 17 gesichert sind.

Die Stromversorgung geschieht über den Stecker 9.

Der Hohlraum 11 zwischen Flansch 14 und Haube 10 ist so bemessen, daß auf dem Adapter weitere Nockenscheiben 7 und dazugehörige weitere Mikroschalter 8 angeordnet werden können, die der Anzahl der Wege des Mehrwegehahnes angepaßt sind.

Nach Einschalten des Motors 6 dreht dieser über Untersetzungsgetriebe 5 und dessen Welle 18 den Adapter 4 und mit ihm den Kugelhahn 2, wobei in der nächst möglichen Stellung der Motor 6 über den nächst tätigen Nocken 13 und den Mikroschalter 8 wieder abgeschaltet wird.

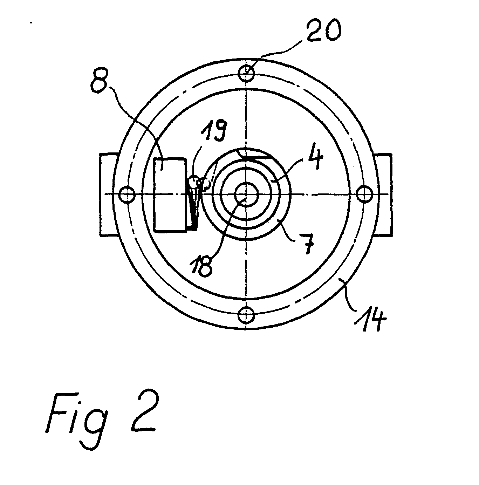

Fig. 2 zeigt eine Draufsicht auf den Flansch 14 mit den Bohrungen 20 zur Befestigung der Haube auf dem Adapter 4, der von der Welle 18 antreibbar ist.

Auf dem Adapter 4 ist eine Nockenscheibe 7 mit einem Nocken 13 dargestellt.

Der Mikroschalter 8 wird über den Fühler 19 betätigt.

## Patentansprüche

1. Mehrwegekugelhahn, bestehend aus einer durchbrochenen Kugel (2) und einem diese umgebenden Gehäuse (1) mit darin angeordneten Kanälen, einer Abdeckhaube (10) mit einem Elektromotor (6) mit Getriebe (5) sowie einem Schaltnokken (13) aufweisenden, mit Schaltern (8) zusammenwirkendem Adapter (4) und einem zwischen Kugel (2) und Adapter (4) befindlichem Betätigungsansatz (12) zur Übertragung von Drehmomenten auf die Kugel (2), gekennzeichnet durch die folgenden Merkmale

a) Kugel (2) und Betätigungsansatz (12) sind einstückig ausgebildet,

b) der Adapter (4) ist auf den Betätigungsansatz (12) aufgeschoben und kraftschlüssig mit ihm verbunden,

c) der Adapter (4) liegt unter Bildung eines Gleitlagers an der Innenwandung einer Bohrung des Kugelhahngehäuses (1) an,

d) der Adapter (4) läuft kugelseitig gegen einen O-Ring (15) aus.

2. Mehrwegehahn nach Anspruch 1, dadurch gekennzeichnet, daß die Kugel (2) im Kugelhahngehäuse (1) von Buchsen (3) gefaßt ist.

3. Mehrwegehahn nach Anspruch 1 oder 2, dadurch gekennzeichnet, daß den Schaltnocken (13) Mikroschalter (8) zugeordnet sind.

4. Mehrwegehahn nach mindestens einem der Ansprüche 1 bis 3, dadurch gekennzeichnet, daß auf dem Adapter (4) separate Nockenscheiben (7) angeordnet sind, die mit entsprechenden Mikroschaltern (8) zusammenwirken.

5. Mehrwegehahn nach mindestens einem der Ansprüche 1 bis 4, dadurch gekennzeichnet, daß die Haube (10) wasserdicht abgeschlossen ist und daß der Adapter (4) den Betätigungsansatz (12) übergreift und ein Gleitlager mit dem Hahngehäuse (1) bildet, das mit Hilfe eines O-Ringes (15) gegen den Ventilinnenraum abgedichtet ist.

6. Mehrwegehahn nach mindestens einem der Ansprüche 1 bis 5, dadurch gekennzeichnet, daß die Mikroschalter (8) und/oder die Nocken (13) zur koaxialen Ausrichtung des Kugelhahnes mit den Kanälen lageveränderlich ausgebildet sind.

7. Mehrwegehahn nach mindestens einem der Ansprüche 1 bis 6, dadurch gekennzeichnet, daß der Kugelhahn mit dem Betätigungsansatz (12) einstückig und materialeinheitlich, vorzugsweise aus PTFE ausgebildet ist.

8. Mehrwegehahn nach mindestens einem der Ansprüche 1 bis 7, dadurch gekennzeichnet, daß der untere Teile des Hahngehäuses (1) in gleicher Geometrie wie die Kugel des Hahnes ausgedreht ist.

## Revendications

1. Robinet à tournant sphérique à plusieurs voies, constitué d'un tournant sphérique percé (2) et d'un corps (1) entourant ce dernier et comprenant des canaux qui y sont agencés, une calotte de recouvrement (10), qui comporte un moteur électrique (6) avec un engrenage (5) et un adaptateur (4), présentant des cames de commutation (13) et coopérant avec des commutateurs (8), et un prolongement de manoeuvre (12) situé entre tournant sphérique (2) et adaptateur (4) pour la transmission de couples de rotation au tournant sphérique (2), caractérisé par les particularités suivantes:

a) le tournant sphérique (2) et le prolongement de manoeuvre (12) sont réalisés en une pièce,

b) l'adaptateur (4) est glissé sur le prolongement de manoeuvre (12) et est relié à ce dernier par une liaison de force,

c) l'adaptateur (4) est appuyé, avec formation d'un palier lisse, sur la paroi interne d'un alésage du corps de robinet à tournant sphérique (1),

d) l'adaptateur (4) se termine du côté du tournant sphérique contre un joint torique (15).

2. Robinet à plusieurs voies suivant la revendication 1, caractérisé en ce que le tournant sphérique (2) est entouré dans le corps de robinet à tournant sphérique (1) par des douilles (3).

3. Robinet à plusieurs voies suivant l'une ou l'autre des revendications 1 et 2, caractérisé en ce qu'aux cames de commutation (13) sont adjoints des commutateurs (8).

4. Robinet à plusieurs voies suivant l'une quelconque des revendications 1 à 3, caractérisé en ce que sur l'adaptateur (4) sont agencés des disques de came (7) séparés qui coopèrent avec des microcommutateurs (8) correspondants.

5. Robinet à plusieurs voies suivant l'une quelconque des revendications 1 à 4, caractérisé en ce que la calotte derecouvrement (10) fermée de façon étanche à l'eau et en ce que l'adaptateur (4) recouvre le prolongement de manoeuvre (12) et forme un palier avec le corps de robinet (1) qui est rendu étanche par rapport à l'espace interne de soupape à l'aide d'un joint torique (15).

6. Robinet à plusieurs voies suivant l'une quelconque des revendications 1 à 5, caractérisé en ce que les microcommutateurs (8) et/ou les cames (13) sont réalisés de façon variable en position pour l'alignement coaxial du tournant sphérique avec le canaux.

7. Robinet à plusieurs voies suivant l'une quelconque des revendications 1 à 6, caractérisé en ce que le tournant sphérique est réalisé en une pièce et en une matière homogène, de préférence en PTFE, avec le prolongement de manoeuvre (12).

8. Robinet à plusieurs voies suivant l'une quelconque des revendications 1 à 7, caractérisé en ce que la partie inférieure du corps de robinet (1) est creusée au tour selon une même géométrie que le tournant sphérique du robinet.

**Claims**

1. Multiway ball valve, consisting of a perforated ball (2) and a housing (1) surrounding this with canals arranged therein, of a covering cap (10) with an electromotor (6) with drive (5), as well as an adaptor (4) having a control cam (13) cooperating with switches (8) and an operating attachment (12) present between ball (2) and adaptor (4) for the transmission of rotational moments to the ball (2), characterised by the following features

a) ball (2) and operating attachment (12) are made in one piece,

b) the adaptor (4) is slipped on to the operating attachment (12) and positively connected with it,

c) the adaptor (4) lies, with formation of a sliding bearing, against the inner wall of a bore of the ball valve housing (1),

d) the adaptor (4) is extended on the ball side towards an O-ring (15).

2. Multiway valve according to claim 1, characterised in that the ball (2) is held in the ball valve housing (1) by bushes (3).

3. Multiway valve according to claim 1 or 2, characterised in that microswitches (8) are associated with the control cams (13).

4. Multiway valve according to at least one of claims 1 to 3, characterised in that, on the adaptor (4), separate cam plates (7) are arranged which cooperate with corresponding microswitches (8).

5. Multiway valve according to at least one of claims 1 to 4, characterised in that the cap (10) is closed water-tight and that the adaptor (4) engages over the operating attachment (12) and forms a sliding bearing with the valve housing (1) which is sealed off against the valve inner space with the help of an O-ring (15).

6. Multiway valve according to at least one of claims 1 to 5, characterised in that the microswitches (8) and/or the cams (13) are made position-changeable for the coaxial alignment of the ball valve with the canals.

7. Multiway valve according to at least one of claims 1 to 6, characterised in that the ball valve is made in one piece with the operating attachment (12) and of the same material, preferably of PTFE.

8. Multiway valve according to at least one of claims 1 to 7, characterised in that the lower part of the valve housing (1) is hollowed out in the same geometry as the ball of the valve.

Fig 1

Fig 2